# EUROPEAN PATENT SPECIFICATION

(11) **EP 4 452 790 B1**
(45) Date of publication and mention of the grant of the patent: **17.12.2025**
(21) Application number: 21852065.8
(22) Date of filing: 23.12.2021
(51) Int. Cl.: B65G 45/22

(54) **ORIENTABLE DEVICE FOR WASHING AND ALSO SANITIZING A CONVEYOR BELT**
AUSRICHTBARE VORRICHTUNG ZUM WASCHEN UND AUCH DESINFIZIEREN EINES FÖRDERBANDES
DISPOSITIF ORIENTABLE POUR LAVER ET ÉGALEMENT DÉSINFECTER UNE BANDE TRANSPORTEUSE

(43) Date of publication of application: 30.10.2024
(73) Proprietor: NGI A/S, 9400 Nørresundby (DK)
(72) Inventor: VISCONTI, Enrico, 4153 Reinach (BL) (CH); OSTERGAARD SAYK, Rune, 9400 Norresundby (DK)
(74) Representative: Larsen & Birkeholm A/S
(86) International application number: PCT/IB2021/062230
(87) International publication number: WO 2023/118941

(56) References cited:
- CN-U- 210 527 643
- JP-A- 2008 056 482
- KR-A- 20200 060 983
- US-A1- 2005 099 007
- US-B2- 6 478 141
- US-B2- 7 195 038

## Description

The present invention relates to an orientable device for washing and also sanitizing a conveyor belt. The proposed device is of the spray type.

### Field of application

The innovation finds particular but not exclusive destination in the industrial sector of automatic handling with conveyor belts. More specifically, it refers to the integrated accessories to remove production residues, clean and also sanitize said belts, in the processes for transforming food products.

Nowadays, modern automatic handling systems with conveyor belts are widely used, in the industrial, artisanal or logistic field, in order to move finished products, semi-finished products and also raw materials in the processing phase in a quick and efficient way. In general, conveyor belts are well known composed of rigid plastic or metal staves, chain interconnected, or composed of a flexible band or link, where said chain or said band are ring closed like a continuous belt to rotate around pins and/or return cylinders placed at the ends, keeping it under tension. Said belt rests on a plane or a series of sliding guides and is driven by at least one electric motor combined with toothed wheels or other conventional actuating parts, suitably integrated by sensors and electronic control means. A metal frame structure supports said belt with the relative rollers and the various motion transmission means, maintaining it in a horizontal or inclined position according to the processing needs. Side and transverse containment small walls are sometimes included which prevent the transported materials from exiting and/or overturning.

More in technical detail, the problem of cleaning and sanitizing a conveyor belt is widely known when it is used in the food sector to move and process fresh and easily perishable food such as meat, fish, fruit or vegetables; in such cases it is indeed necessary to carefully wash the belt and all the surfaces in contact with such food at the end of each day or shift. By way of example, in the case of fish processing, a complete washing and sanitizing cycle involves various phases in sequence, including: a first spray application of pressurized water, then disaggregating agents of the lipids and agglomerated substances, afterwards more water and then spray-applied or foamed disinfectant agents, and finally a prolonged rinsing is provided. In such cases, at an industrial or artisanal level, a complete cleaning and sanitizing cycle with manual spray means, carried out according to the current regulations of the sector, lasts more than 2 hours for 20 linear meters of belt. Each type of fresh food transported involves diversified washing cycles; these, however, are still long and difficult to execute.

Substantially, it has been found that said washing and sanitizing operations of a conveyor belt carried out in a conventional way involve a substantial use of time and resources, particularly due to the rapid deterioration of the fresh material which adheres and accumulates on the surfaces and in any possible recesses and interstices of the conveyor means. A washing device is therefore necessary which is suitable for thoroughly cleaning the different types of belt, including those with staves, mesh ones or smooth ones, being suitable for removing any possible fragment which may stagnate or fall and spread when handling; indeed, the hygienic and health risk of possible contamination is well known. Among the operators in the sector there is thus the need to solve these problems by providing each conveyor belt with its own means for automated washing, like an accessory device integrated on the machine.

Recently, some companies operating in the sector of conveyor belts have proposed innovative spray washing solutions of the automatic or non-manual type, with fixed devices which are integrated into the supporting structure of the handling installation, similar to what already happens in other industrial sectors of food production; reference can be made, for example, to the washing solutions with tubes and ball nozzles which are integrated inside wine or beer fermentation tanks. In the specific sector of conveyor belts, certain washing systems are already known with pressure dispensing means of the tubular bar type, fixed transversely above and/or below the belt, with atomizing nozzles also called nebulizers, which are directed on it in such a way as to hit an entire band of it across its entire width. Integrated solutions are also known where a dispenser is fixed inside the belt itself in the proximity of the return roller at the end, between the upper forward and the lower return, or by replacing said roller with a multifunction cylinder which coaxially integrates a sprayer with multidirectional nozzles which hit the internal face of the belt in only one or in both directions. By way of mere example, see the advanced washing system which is called HyClean CIP, by the Swiss company Habasit AG, Reinach BL - www2.habasit.com/it/habasit-hyclean.htm.

It has been also found that according to the most effective and easier solutions, from an operational point of view, the spray nozzles are open or without fairings or other containment means, so that the water and detergent substances can freely flow on the installation components and on the floor. Nowadays, indeed, handling installations for the food sector are mainly made of stainless steel, or with synthetic materials suitable for the purpose, and are also placed in environments suitable for such washing as required by current regulations.

For the purposes of the invention, in particular, it has been found that the integrated washing solutions are each time designed and made to measure, they are expensive and can be also improved in terms of construction and fixing; substantially, they are not technically optimized. Indeed, it is well known that a conveyor belt handling installation cannot be standardized as a finished product, since it is made on request, according to the customer's particular processing needs; reference can be made, for example, to the different sizes and/or methods of use that the same belt may have. Consequently, also an integrated automatic washing system has to adapt to the particular construction configuration of the installation on which it is mounted. In addition, there is a request for providing also the existing installations with a modern washing system, of the integrated type, with automatic spray washing. However, despite the aforementioned needs, adequate washing devices or technically effective solutions are not available, according to the various aims described below.

### State of the art

In order to determine the state of the art relating to the proposed solution, a conventional verification has been carried out by examining public archives, which has led to the identification of some prior art, including:
**D1** US6978880 (Barret)
**D2** US6740172 (Griffiths)
**D3** EP2603443 (Lucchi)
**D4** JP2008056482 (Takahashi et al.)

D1 and D2 propose a washing device configured as a roller integrating a rectilinear tubular bar which simultaneously acts as a washing means and rotation pin. It can be transversely mounted inside a conveyor belt like a conventional sliding roller, where said tubular bar is provided with multiple spacer elements of the belt with nozzles interposed between them, for washing purposes. The bar has a closed end and an open end which protrudes outside the belt in such a way as to connect to the means for continuous supply of the washing liquids; it can have a circular or square section.

D3 describes a combined device where a first upper roller washing element is in contact with the conveyor belt, as per for example in D1 and D2, and it is also connected to a second lower washing element of the spray bar type, which are parallel to each other and are joined by a shared duct for washing liquids; the second element is positioned below the belt in such a way as to simultaneously wash both its faces. Both the upper roller and the lower spray bar are constrained to the supporting structure of the conveyor belt, on both its sides for a total of four fixing points, with external support brackets and other mechanical fixing means which are made to measure, each time designed according to the size and construction characteristics of said supporting structure. D4 (JP2008056482) discloses a washing and also sanitizing device according to the preamble of claim 1. In particular, D4 proposes a conveyor washing unit comprising a pair of upper and lower fork-shaped nozzle heads and a mounting member for mounting the nozzle heads to a conveyor frame; the nozzle heads have a plurality of injection nozzles arrayed in the cross direction of a traveller and inclined, directed opposite upward and downward with respect to the moving direction.

Ultimately, it is therefore reasonable to consider the following as known:
- a roller washing device placed inside and in contact with the conveyor belt, which longitudinally integrates a spray bar provided with atomizing and/or nebulizing nozzles, like an axial rotation pin;
- a combined device where a spray roller is connected to a lower spray bar, parallel to each other and arranged transversely with respect to the conveyor belt, both constrained to the supporting structure of the conveyor belt;
- a conveyor washing unit comprising a pair of upper and lower fork-shaped nozzle heads;
- mechanical support and fixing means such as spacers and/or interposed elements and/or shaped brackets, which are made to measure according to the particular size and construction characteristics of the supporting structure of a conveyor belt;
- means for conveying and/or diverting liquids under pressure, connected to a continuous flow network.

### Drawbacks

The solutions just mentioned make it possible to wash and sanitize a conveyor belt by spraying water suitably pressurized and nebulized, or atomized, possibly with the addition of detergent substances. However, it is known to the operators in the sector that they have certain disadvantages.

It is widely known to the operators in the sector that conventional solutions of the type with a spray roller, as per for example in D1 or D2, are not sufficiently effective from the point of view of sanitization, as they act only on one face of the conveyor belt. Furthermore, said roller is permanently integrated into the supporting structure of the belt, like a sliding roller, so important operations are required to modify and/or replace constructive parts of the installation. This integration, therefore, has to be carried out at an initial phase of realization of the installation, or by stopping production. In addition, it has been found in practice that the aforementioned integration requires structural changes to the installation which are inevitably complex and difficult to realize.

The advanced solution referred to in D3 acts instead on both sides of the belt and is considered satisfactory with regard to the washing and sanitizing efficacy of a modern conveyor belt. However, it has been found that this solution, like any composite washing device with various means diversified by type and function, is not very versatile, it is expensive and bulky. In particular, it has been found that the combined solutions such as D3 are not constructively optimized in such a way as to easily adapt to different installation construction configurations, like a universal component. Indeed, multiple support and/or fixing elements are required, each time made to measure for the purpose of adequate assembly on the supporting structure of the conveyor belt; accordingly, said assembly involves lengthy and expensive operations which are difficult to perform.

In general, it has been thus found that conventional and known solutions are not easy to install and therefore they are not often considered by end users in the frequent cases of applications subsequent to the first installment of a conveyor belt handling installation, with the known consequences and risks of a sanitation of manual type. For the aforementioned cases of applications subsequent to the first installment, or retrofit, an accessory device for easy integration is therefore preferable. Conventional and known solutions, on the contrary, have to be redesigned each time according to a specific realization. Furthermore, it is well known to the operators in the sector that substantial and irreversible alterations are necessary in the supporting structure of the installation and/or of its components to properly mount them.

More in technical detail, it is provided that the spray rollers and spray bar dispensers, individually mounted or also combined on the same belt, are all fixed to the supporting structure of the installation by means of particularly shaped seats integrated on the structural elements which support the sliding rollers, or mounted laterally from the outside by means of shaped and made-to-measure superstructures. These fixing systems are not universal or not adaptable, they do not facilitate assembly operations and also increase the size and overall installment costs.

Another disadvantage, consequent to the various problems described above, is linked to the fact that currently existing conveyor belt handling installations are not generally provided with an adequate automatic spray washing system, with high hygienic and health risk in the case of food processing where the necessary manual sanitization operations are not correctly carried out.

In the light of the above, the need is reasonable for companies in the sector to identify advantageous solutions which are capable of overcoming at least the problems noted above and achieving the intended purposes.

### Summary of the invention

These and other aims are achieved with the present innovation according to the characteristics of the appended claims, solving the problems set forth by means of an innovative washing and also sanitizing device (10a, 10b) for a conveyor belt (200), which can be easily integrated into the supporting structure (201) as an accessory, being composed of two parallel spray bars (101, 102) with aligned atomising nozzles (104) which are joined on only one side to a supply riser of the fluids (103, 130), forming a tubular fork-like structure. The upper spray bar (101) has a preassembled fixing group (106), of the clamp tightening type where a flat bracket (110) is interposed and protrudes to be fixed to a side rail (201, 204) in the proximity of the belt (200), after inserting the spray bars (101, 102) on one side, thus fixing the entire device (10a, 10b) in an integral and reversible way. The lower spray bar (102) is self-supporting in an oscillating way (133) and is connected with a swivelling connection (103, 105) to direct the nozzles as needed.

### Aims

Different aims are achieved through the considerable creative contribution whose effect constitutes immediate technical progress.

A first aim was to make available an effective spray washing device for conveyor belts, of the compact and integrated type, which is constructively optimized to facilitate its assembly in new installations and also in existing installations. Indeed, the invention easily adapts to different construction configurations, with minimum encumbrance and without substantial and/or irreversible alterations in the supporting structure of the conveyor belt.

A second aim, directly connected to the previous one, was to make available a spray washing device for conveyor belts which is very versatile, suitable for completing any existing installation as an accessory, and industrially producible at reduced costs and with high quality standards. Accordingly, it is possible to modernize existing installations quickly, easily and economically, adapting them to modern standards of hygiene and food safety; in addition, the times and recurring costs for sanitization are significantly reduced.

A third aim was to make available a spray washing device for conveyor belts which is extremely effective and safe for sanitizing purposes, with at least two spray dispensers which can be oriented and combined with each other. In particular, the intention is to combine a dispenser of the spray bar type which is mounted inside the belt, with a similar dispenser external to the belt which can be oriented by rotation on its own axis and is also oscillating together with the supply riser to stably position itself as needed. Furthermore, the intention is to increase the hygiene of the fixing means, by providing shaped components and interconnected with each other with sealing gaskets of the anti-infiltration type, in order to make sanitization easier and safer.

A fourth aim was to make available a spray washing device for conveyor belts which is constructively improved, optimizes the conveyance of the fluids and the fixing means, reducing production costs. Furthermore, the costs and times for assembling the device on a belt handling installation are significantly reduced; in particular, the time and costs of downtime are reduced to few minutes, both in the assembly and in the removal of the same device.

Another aim was to significantly limit the alterations of the supporting structure of the installation, only fixing holes without interposed superstructures being required.

These and other advantages will appear from the following detailed description of some preferential embodiments with the help of the attached schematic drawings whose execution details are not intended to be limiting but only examples.

### Content of the drawings

**Figure 1** is an ensemble axonometric view of a conveyor belt handling installation where the washing device which is the subject matter of the present invention is mounted, being integrated therein as an accessory, with a first spray bar inserted inside the belt and a second spray bar on the outside, below it.
**Figure 2** is an axonometric view of the washing device which is the subject matter of the present invention, in the same position as in the previous figure, being shown here in a first variant embodiment with the first spray bar which is provided with two fixing groups and is joined in continuity to the supply riser, like a one-piece element.
**Figure 3** is a front view of the washing device which is the subject matter of the present invention, being shown here in a second variant embodiment where said first spray bar is joined with a swivelling connection to the supply riser, similarly to the second bar.
**Figure 4** is an axonometric view of the washing device of the previous figure.
**Figure 5** is an exploded axonometric view, relating to the first variant embodiment of Figures 1 and 2.
**Figure 6** is an exploded axonometric view, relating to the second variant embodiment of Figures 3 and 4.
**Figure 7** is a further exploded axonometric view, relating to the second variant embodiment of Figures 3 and 4, represented from a different angulation compared to the previous figure, where the fixing group represented in the following figure is highlighted in a dashed circle.
**Figure 8** is an exploded and enlarged axonometric view of the components which compose the fixing group shown in the previous figure, as provided by the present invention.
**Figure 9** is an axonometric view of said fixing group, assembled here and without the spray bar, represented from an opposite angulation with respect to the previous figures.
**Figure 10** is an orthogonal view from above of the fixing group of the previous figure.
**Figure 11** is a front view of the fixing group referred to in the previous figure, including a portion of spray bar, where the X - X section plane shown in the following figure is highlighted.
**Figure 12** is an orthogonal section of the fixing group relative to said X - X section plane.
**Figure 13** is an axonometric view of the swivelling connection for joining the spray bar to the supply riser, as provided by the present invention.
**Figure 14** is an orthogonal section of the swivelling connection as per the previous figure, in correspondence with the vertical center line plane, where the flanged end portion of the spray bar is included at the bottom while at the top there is the threaded element connecting the supply riser.
**Figure 15** is an axonometric view of an atomizing nozzle for spray bars, as provided by the present invention, which is provided with a threaded connector and with a shaped gasket.
**Figure 16** is a front view of the atomizing nozzle referred to in the previous figure, where the concave coupling face of the gasket is highlighted in order to couple to a circular section spray bar, schematically represented with a broken line.

### Practical realization of the invention

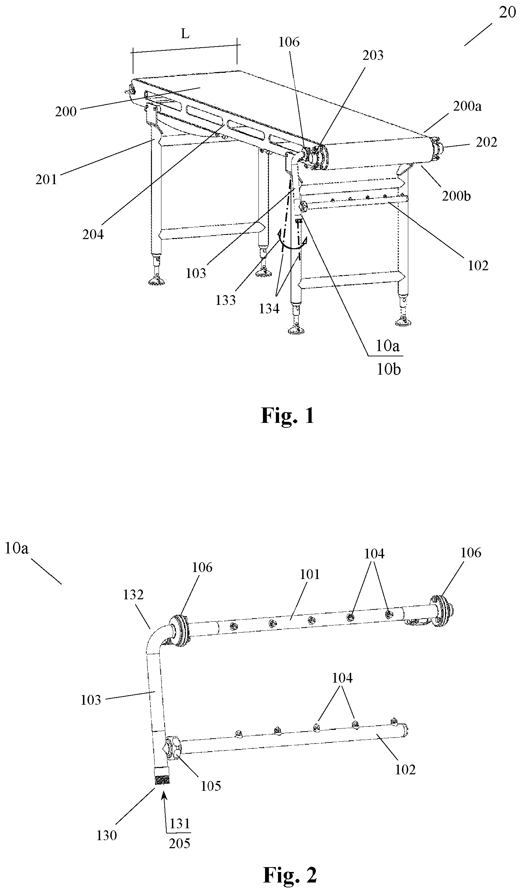

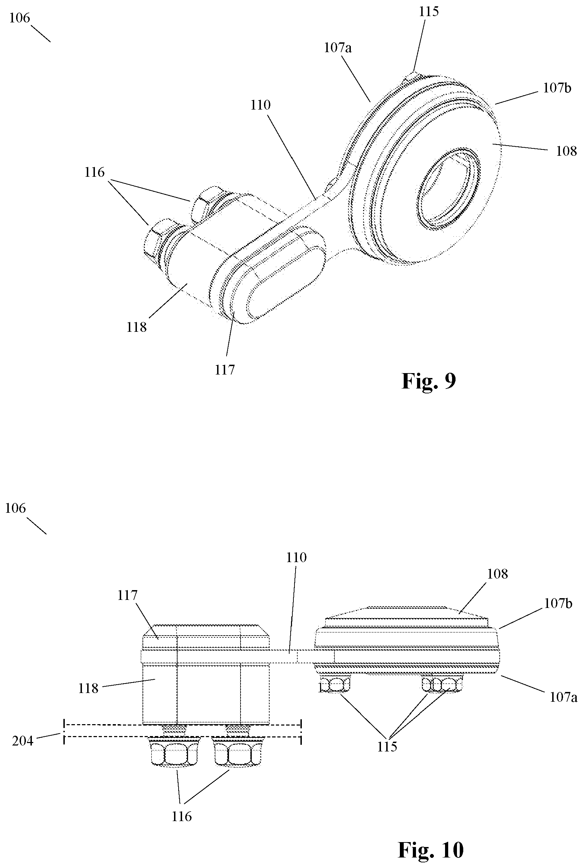

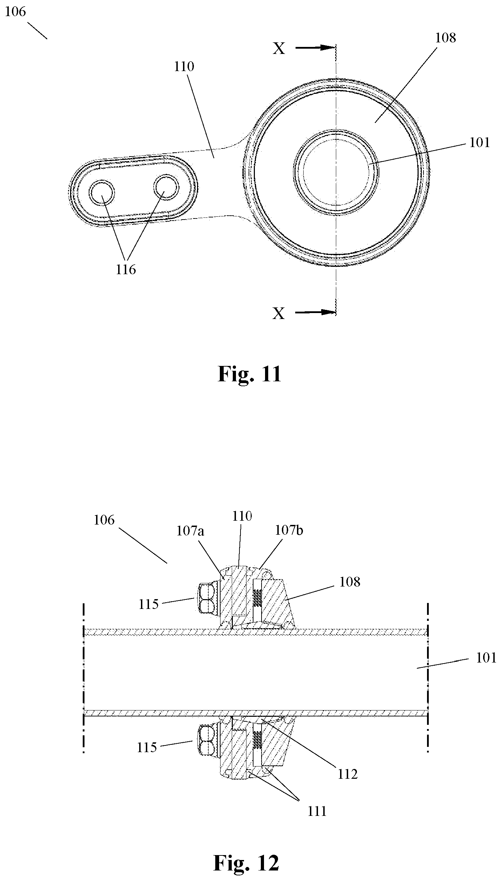

With reference also to the figures (Figs. 1 - 16), the subject matter of the present invention relates to an advantageous washing and also sanitizing device (10a, 10b) for a conveyor belt (200), particularly efficient and convenient for use, which is configured as an accessory with a single and open fork-like structure (Figs. 2, 3, 4) which can be easily integrated into any belt handling installation (20) (Fig. 1). The proposed device can be inserted sideways and constrained rapidly to the supporting structure of an installation (201, 204) with its own fixing means (106), in an integral and removable way, being also orientable as needed as described below. It is clarified that said washing and also sanitizing device is hereinafter referred to as washing device (10a, 10b) for the sake of brevity.

In a more detailed way from the construction point of view, said washing device (10a, 10b) is composed of a pair of spray bars (101, 102) which are tubular and parallel to each other, which are: a first upper bar (101) and a second lower bar (102), with respect to the position of assembly on the belt (20, 200, 204) (Fig. 1). On one side, the two spray bars (101, 102) are joined to a common riser of supply (103) of the water and/or washing fluids, which is arranged orthogonally to them. On the opposite side, on the contrary, they are individually closed, terminating without junctions. Said supply riser (103) has a monodirectional flow with the inlet (130, 131) placed in the lower end, considered with respect to the position of assembly on the belt (Figs. 1, 2, 3), to be easily connected to a flow network (205), while the opposite end is bent like an elbow (132) to be butt-joined horizontally to said first spray bar (101); the second spray bar (102) is connected orthogonally to said riser (103, 105) below it (101), so that the washing flow enters perpendicularly (103, 131) to the spray bars (101, 102) and continues therein exiting the atomising nozzles (104), so as to act with balanced sprays from above and from below the belt (200) once the device (10a, 10b) is mounted on it (Fig. 1). The incoming flow can be combined according to the needs of the different washing cycles, according to current regulations or operating practices, for example by regulating or mixing flows containing detergent or disaggregating substances, or with other specific substances.

The spray bars are individually provided with atomising nozzles (104), aligned and spaced in such a way as to direct the washing sprays onto an entire portion or band of the belt (200), across its entire width (L), simultaneously hitting it from above and from below. Both bars have thus a length which is at least corresponding to the width (L) of the belt (200); preferably, it is equal between the two bars, being it however possible to provide different lengths according to the needs. In general, it is clarified that said nozzles (104) are particular replaceable perforated means suitable for spraying liquids under pressure, or any washing fluid, with adequate control of the angle of the jet and the size of the droplets; they are chosen according to the type of spray required and the intended use. Conventionally, these nozzles are called atomising or nebulising nozzles, since said liquids are transformed into very small drops they forcefully direct, or atomise, according to the various application needs. In the present description, the expression atomizing nozzles (104) intends to include all possible types of spray nozzles.

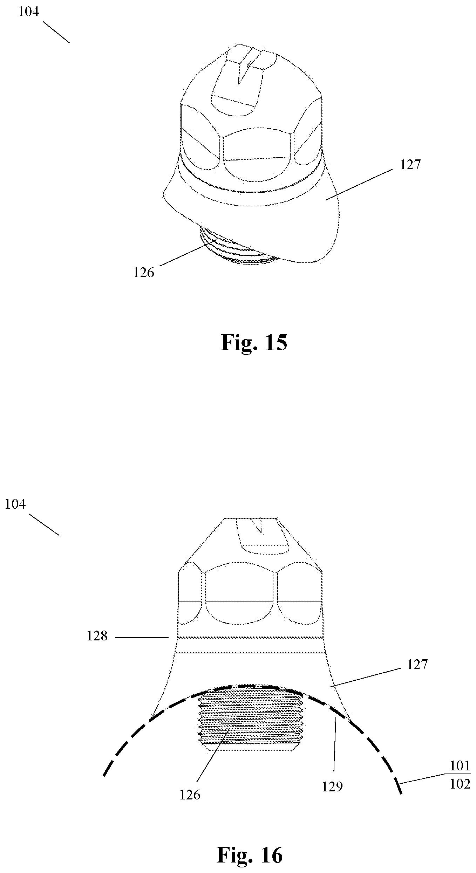

In a more detailed way from the technical point of view regarding the coupling of the nozzles (104) to the spray bars (101, 102), they are screwed or engaged in corresponding holes where a sealing gasket is interposed. Preferably, the present invention provides spray bars with a round tubular section where all the atomising nozzles (104) are individually applied by interposing a shaped support and sealing gasket (127); in particular, it is flat (128) towards the nozzle and concave (129) towards the bar in such a way as to connect in continuity and formal coherence to the curved outer surface of the bars, sealing all the interstices and the coupling hole (Figs. 15 and 16). For these purposes and for a greater flowability of the washing liquids, it is preferable that also the lateral surfaces of said gasket be concave and/or with tangent profile. In the preferred embodiment of the invention, said shaped gasket (127) is colored, being for example of a contrasting chromatic shade with respect to the atomizing element which is in stainless steel for food use; more generally, in order to differentiate and highlight the stainless steel parts from the deformable ones, the invention provides that all the gaskets are equally colored in contrasting colors, including those of the fixing group (106) and of the swivelling connection (105).

The fork-like (101, 102, 103) washing device (10a, 10b) proposed here can be easily and quickly integrated into the supporting structure (201) of a common automatic conveyor belt handling installation (20, 200) where the sliding rollers are mounted on side rails (204), inserting the two spray bars (101, 102) sideways as an independent accessory which does not touch the belt (200), which is therefore interposed between them, with the supply riser (103) completely at the exterior on one side (Fig. 1). In particular, it is provided that only the first spray bar (101, 106, 110) is fixed to the supporting structure (201, 204), after inserting it horizontally between the forward belt (200a) and the return belt (200b). To this aim, it (101) is provided with at least one preassembled fixing group (106) of the bracket type with clamp, which is suitable for supporting and locking it in correspondence with a side rail (204), thus fixing the entire device (10) in an integral and removable way in the correct operating position. The second spray bar (102) is instead suspended and is self-supporting by means of the common supply riser (103), being preferably joined with a swivelling connection (105) as described in detail hereinafter (Figs. 1, 5, 6, 7, 9, 12, 13, 14).

The aforementioned fork configuration (Figs. 2, 3, 4) in combination with the innovative preassembled fixing system (106) makes the washing device (10a, 10b) easily able to be integrated into any conveyor belt (20, 200), as a universal accessory, even in case the handling installation (20, 201) is not designed or prepared for this integration. A fixing system is proposed with flat bracket with clamp (106, 110) which facilitates assembly operations and offers ample adaptability, since the final positioning with respect to the belt and also the direction of the sprays can be oriented.

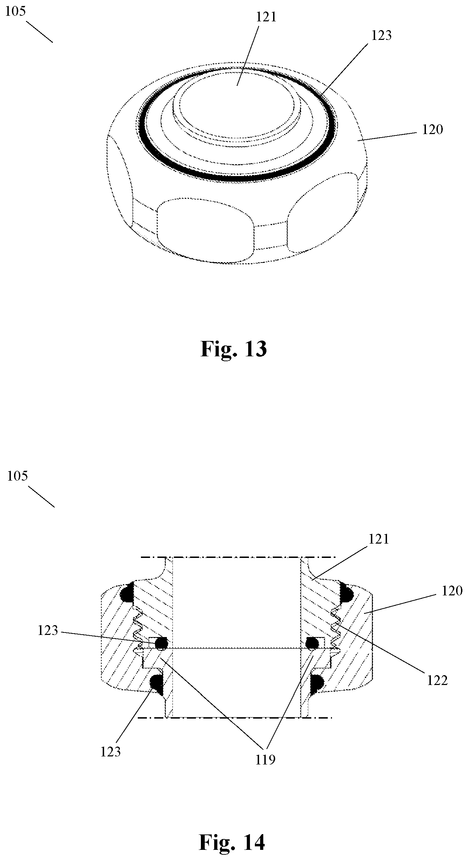

More in detail regarding the ease of assembly, it is noted that the device (10a, 10b) has a fork structure open on the opposite side with respect to the supply riser (103) and therefore the first spray bar (101) can be inserted without interference in the supporting structure of the belt on one side, between the upper forward and the lower return (200a, 200b), and fixed therein. The other spray bar (102) is instead below it (200) to hit it simultaneously and in an oriented way on both its faces (Fig. 1, 2, 3). It should be noted that the second spray bar (102) is preferably, but not exclusively, flanged (119) and connected to said riser (103, 121) with a swivelling connection (105) with conical thread (122), which is tightened from the exterior as needed with a metal ring (120) in the form of a nut, so as to lock it (102) with the desired orientation of the sprays (104, 124, 125). Ring seals (123) are interposed between the components of the connection, with an anti-infiltration effect (Figs. 13, 14). The invention also includes a simplified embodiment variant from the construction point of view, not shown in the figures, where the spray bar is fixed or firmly joined to the riser, in a predetermined way, thus renouncing the customizable orientation of said swivelling connection. In particular, the proposed innovative fixing system (106) allows the washing device (10, 103) to partially oscillate before the complete tightening, like a swinging, in order to be able to rotate on the longitudinal axis of the first bar (101, 125, 133, 134) to precisely adapt the positioning, distance and orientation of the sprays (101, 102, 104) with respect to the belt (200) (Figs. 1, 5, 6). These combined characteristics of configuration (101, 102, 103) and fixing (105, 106) make the proposed device orientable in an effective and widely customizable way.

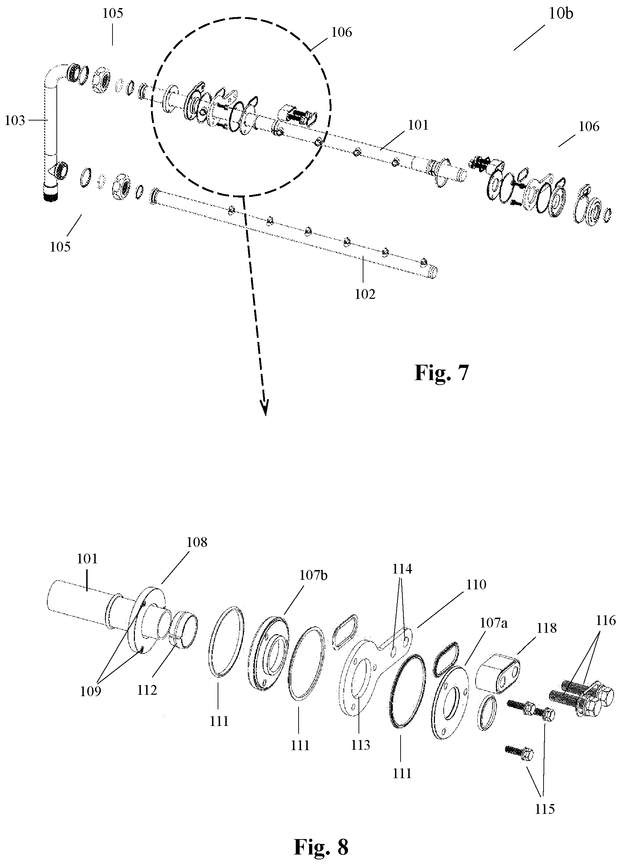

In a more detailed way from the technical point of view regarding the fixing group (106) of the first bar (101) (Figs. 7, 8, 9, 10, 11, 12), it consists of two opposed perforated disks (107a, 107b) having a central hole for said bar (101, 109) and holes for the crossing of the clamping screws (115), acting by clamp tightening on the interposed elements which include at least one flat bracket (110), protruding from said disks to fasten to the supporting structure, and multiple watertight gaskets (111). Said gaskets are anti-infiltration, that is they have the function of preventing the entry of liquids and/or any organic material which could cause bacterial proliferation inside. Preferably, the tightening is obtained by means of clamping screws (115) on threaded seats in an external coupling disk (108, 109). Said flat bracket (110) has an elongated configuration with respect to said disks, preferably asymmetrical, with a main hole (113) where it is inserted and rotates in said bar (101) until it reaches the correct mounting position with respect to the belt, which therefore corresponds to the clamping position of the entire group (106). This position, indeed, is defined each time according to the supporting structure and/or the width of the conveyor belt (200, L), during the installation phase of the device on the conveyor belt. Furthermore, said bracket (110) comprises at least two fixing holes (114) positioned on the opposite side with respect to the main hole (113), at the end of the elongation, to block said group (106) to the supporting structure of the belt ( 201, 204), thus fixing it stably in the most suitable operating position. To this aim, these two fixing holes (114) overlap corresponding holes and/or threaded seats which are simultaneously or previously obtained in a side rail (201, 204) in the proximity of the belt, as described hereinafter.

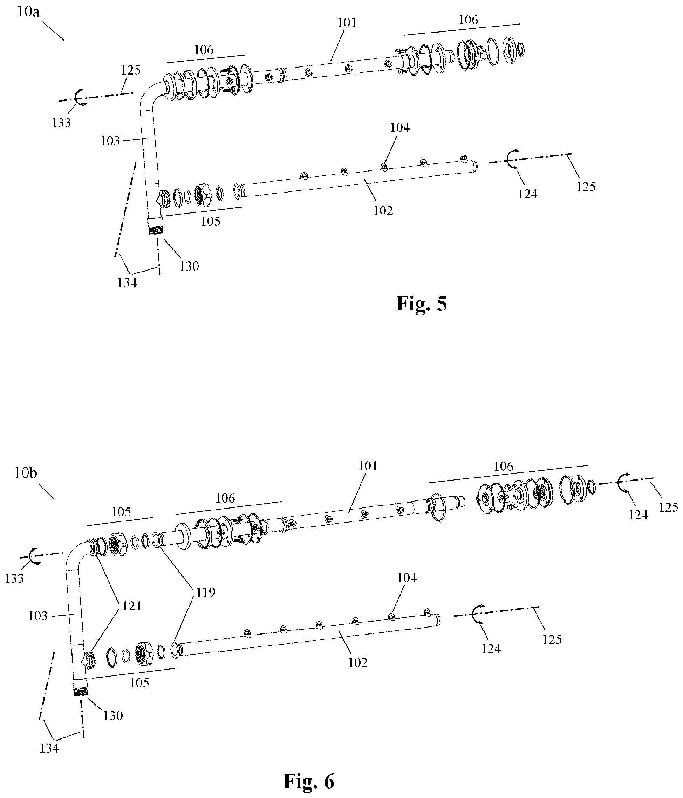

A washing device (10a, 10b) is then obtained where the lower spray bar is swinging (102, 133, 134), that is it oscillates before the complete tightening of the bracket (101, 110, 115) and its stable fixing (114, 116) to the supporting structure of the belt (200, 201), with the upper bar (101, 106, 125) which therefore acts as a constraint and rotation pin (Figs. 5, 6). The final inclination of the mounted device (10, 103, 20) (Fig. 1), or the positioning of the lower bar with respect to the belt (102, 200) and to the upper bar (101), is determined by the final tightening position ( 106). To this aim, it is pointed out that the flat bracket (110) can slide (113) and rotate on its own plane and can be tightened (108, 109, 115) in the operating position which is each time more suitable according to the desired washing and/or of the type of belt and/or of the conveyed product, in such a way as to adjust as needed the inclination of the supply riser (103) and/or the orientation of the sprays (101, 102, 104) and/or the distance of the spray bar with respect to the belt. From an operational point of view, therefore, the operators correctly position the fixing group (106) and once the flat bracket (110) has been oriented, then they can easily perform said tightening (108, 109) and insert the upper bar into the belt (101, 200) superimposing the fixing holes of the bracket (110, 114) on the aforementioned holes and/or threaded seats previously obtained in the side rail (204), to join them with through screws (116) or equivalent junction elements and then fix the entire washing device (10a, 10b) in an integral but reversible way.

In a more detailed way under the operational point of view regarding the fixing of the flat bracket (110, 114) to said side rail (204), it is noted that the conveyor belts generally have sliding or return rollers (202) mounted along the path of the belt, symmetrically butt-fixed in correspondence with the central pin on both sides, anchoring to the lateral and continuous elements of the supporting structure (201) which are conventionally referred to as rails (204) or also boards. The washing device proposed by the invention (10, 106) provides for the fixing of said upper spray bar (101, 106, 110, 116) to one or both of these rails (204), similarly to a sliding roller but without contact with the belt (Fig. 1). In most cases, said side rail (204) consists of a rectangular or round steel tube, arranged longitudinally alongside the belt, or is a continuous band having a height equal to the distance between the forward and return of the belt; alternatively, it has an equivalent lattice or frame configuration. In any case, the transversal insertion of the bar (101) inside the belt, between the forward and the return (200a, 200b) occurs easily, since it can be inserted directly into the interstices where the rail is tubular or frame-like, or it can be inserted through it where the rail is a rigid band after making therein a conventional hole (203) with a larger diameter with respect to the same bar.

In practice, the aforementioned fixing (106, 110, 204) can be provided only on one side of the belt, that is with the protruding spray bar (101), or on both sides of the belt symmetrically to it, thus fixing on both opposite side rails where greater stability is required during use. In practice, only one fixing group (106) is provided, positioned on said bar (101) in the proximity of the supply riser (103) when the belt (200) has a limited width (L) and/or when the pressure of the washing fluid is minimal, and instead it is provided that the same fixing group (106) is mounted on both sides of the belt, one on each side and symmetrically to it (Fig. 1), where it (200) is very wide (L) and/or said pressure is high, so as to avoid any vibrations, excessive noises and for greater safety and duration.

Instead of a pair of opposing fasteners (106), a combined solution of economic type is also provided which is suitable in the case in which the washing device is mounted on continuous band rails, crossing them through conventionally made holes. Only one fixing group (101, 106, 112, 201) is prepared and locked in the proximity of the supply riser (103), while on the opposite side the same bar (101) is only inserted with rotation constraint in a hole having a diameter suitable for this purpose, thus limiting misalignments and excessive vibrations.

In a first embodiment variant (10a) (Figs. 2, 5), the washing device proposed by the invention is made with circular section steel tubes where a first continuous tube which is 90-degree curved, like an overturned L, forms the first spray bar (101, 104) already joined to the riser for the supply (103) of the washing fluids. For construction purposes, it can be made in one piece with a single bent tube or with two butt-welded tubes. The male threaded element of the swivelling connection (105, 106) is then welded on said riser (103) for the second spray bar (102).

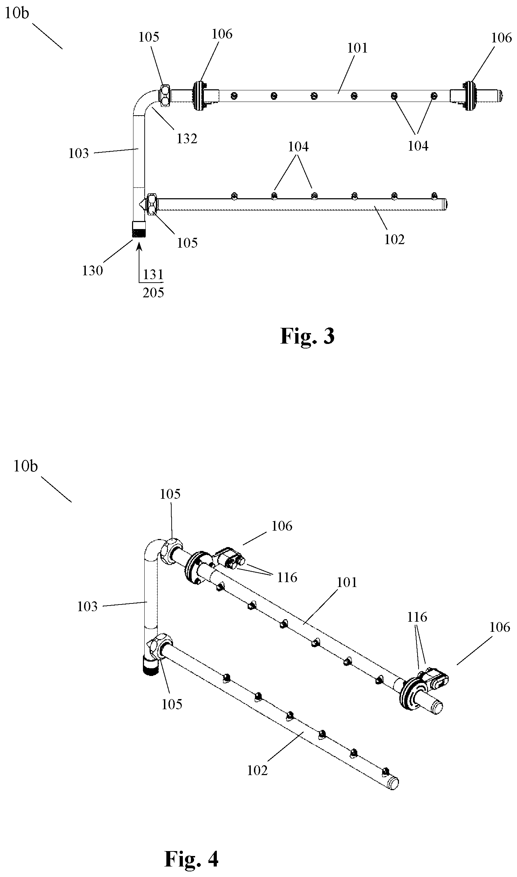

In a second embodiment variant (10b) (Figs. 3, 4, 6, 7), equivalent to the solution described above for structural configuration and fixing to the belt, it is provided that the upper spray bar (101) and the supply riser (103) are discontinuous and butt-joined with a swivelling connection (105) with conical thread like the one provided for the lower bar (102), so that the upper bar (101) can be also oriented by a 360-degree rotation on its own axis to direct the atomising nozzles (104) with greater freedom and precision. In this case, therefore, the joining butt of the upper bar (101) is flanged (119) similarly to the lower one (102), for the purposes of said connection, where also the functionality, configuration and length are similar or equal to each other (101, 102). It is noted that in this second embodiment variant the supply riser (103) is a truncated tube having an inlet (130) at the bottom and two parallel outlets, like a manifold with the top head bent so as to make a 90-degree connection of both spray bars.

Finally, it has been experimentally verified that the proposed device (10a, 10b) to spray wash a conveyor belt (20, 200) is extremely effective and safe in sanitization and it is also quick and convenient in frequent use, as an accessory which is easily applicable or removable in multiple installations, according to the needs.

### Nomenclature

(10a, 10b) washing and also sanitizing device for conveyor belt, which can be easily integrated as an accessory, according to the present invention. In a first embodiment variant (10a) the upper spray bar is joined in continuity to the supply riser, like a one-piece element, while in a second embodiment variant (10b) the upper spray bar is structurally discontinuous being joined with a swivelling connection like the internal spray bar;
(101) first upper spray bar;
(102) second lower spray bar;
(103) riser for the supply of the washing fluids;
(104) atomizing nozzle;
(105) swivelling connection;
(106) group for fixing to the supporting structure of the conveyor belt, of the orientable and hygienic type for the purpose of sanitization;
(107a, 107b) opposed perforated disks;
(108) external coupling disk;
(109) threaded seats for clamping;
(110) flat bracket;
(111) sealing gasket, of the anti-infiltration type, for safety and hygiene;
(112) self-locking gasket;
(113) hole for spray bar;
(114) holes for fixing to the supporting structure;
(115) component clamping screws;
(116) screws for fixing to the supporting structure;
(117) external plate;
(118) spacer;
(119) circular end flange;
(120) threaded ring nut;
(121) threaded connecting element, in the supply riser;
(122) conical thread;
(123) ring gasket, of the anti-infiltration type, for safety and hygiene;
(124) axial rotation of the bar, to direct sprays;
(125) longitudinal axis of the bar;
(126) threaded connector of the nozzle, with internal channel;
(127) shaped nozzle gasket;
(128) flat coupling face, towards the atomizing nozzle;
(129) concave coupling face, towards the bar;
(130) washing fluid inlet;
(131) flow streaming direction;
(132) elbow bend;
(133) riser and lower bar oscillation, swinging;
(134) riser longitudinal axis;
(20) automatic handling installation;
(200) conveyor belt;
(200a) upper forward belt;
(200b) lower return belt;
(201) supporting structure;
(202) roller;
(203) bar insertion hole;
(204) side rail;
(205) external flow network, of water and/or washing fluids, with continuous flow;
(L) width of the conveyor belt.

## Claims

1. Washing and also sanitizing device (10a, 10b), of the spray and orientable type, for a conveyor belt (200) of an automatic handling installation (20) with supporting structure (201) with side rails (204), which device (10) has two tubular spray bars provided with atomising nozzles, integral and parallel to each other, which can be positioned horizontally above and below it without touching it so that the sprays of the nozzles simultaneously hit one of its portions of both external and internal surface, in all its width (200, L); said washing device (10a, 10b), with a single inlet (130) of the washing fluids to connect to an external flow network (205) with continuous flow; said washing device (10a, 10b), being joinable to said supporting structure of the installation (20, 201) in an integral way, with fixing means of the mechanical type; said washing device (10a, 10b), consisting of a single tubular and coplanar structure, open on one side like a fork, with a first upper spray bar (101) and a second lower spray bar (102) which are parallel to each other and are joined on one side to a common riser of supply (103) of the washing fluids arranged orthogonally to them, while on the opposite side they are individually closed and terminate without junctions; and where said supply riser (103) has a monodirectional flow from the bottom upwards, with the inlet (130) in correspondence with the lower end and with the opposite end bent like an elbow (132) which is butt-joined horizontally to said first spray bar (101), while said second spray bar (102) is connected orthogonally to said riser (103) with a connection; and where the washing flow enters from the bottom perpendicularly (103, 130, 131) to said spray bars (101, 102) and continues therein exiting the atomizing nozzles (104) which are aligned; and where said fork-like (101, 102) washing device (10a, 10b) can be joined into said supporting structure (201) by inserting it sideways and fixing only one spray bar through at least one fixing means to support it and lock it to the conveyor belt (200) in correspondence with a side rail, and thus fixing the entire device (10a, 10b) in an integral and removable way, in operative position; and where the other spray bar is self-supporting, being joined on one side to said supply riser (103) with said connection;
said washing device (10a, 10b), **characterized in that** the first upper spray bar (101) is provided with at least one preassembled fixing group (106), of the bracket type with clamp, and wherein the washing device (10a, 10b) can be oriented in its positioning with respect to the belt (200), oscillating (102, 103, 133) around the longitudinal axis of the first spray bar (101, 125) until said fixing group (106) is completely tightened in such a way as to lock the supply riser (103, 134) and the second spray bar (102) in the desired position.

2. Washing device (10a, 10b) according to the previous claim, **characterized in that** at least said second spray bar (102) can be oriented independently of the aforementioned positioning with respect to the belt (133, 134, 200), being connected to said supply riser (103) with a swivelling connection (105) which allows it to rotate around its own axis (102, 123, 124), directing the nozzles (104) as needed.

3. Washing device (10a, 10b) according to claim 1 or 2, **characterized in that** said fixing group (106) includes opposed perforated disks (107a, 107b) and a coupling disk (108) acting with clamp tightening, with anti-infiltration sealing gaskets (111) and at least one self-locking gasket (112), and with a flat bracket (110) which is interposed between said perforated disks (107a, 107b) and protrudes therefrom, being provided with a main hole (113) which is coaxial to said disks for said first bar (101) and holes for clamping screws (115), and with at least two fixing holes (114) placed in its (110) protruding portion to fix it to said supporting structure (20, 201) without rotations, engaging with screws (116) on corresponding fixing holes of a side rail (204), as through holes and/or threaded seats, made in the proximity of the belt (200) at least on the side of the supply riser (103).

4. Washing device (10a, 10b) according to claim 1 or 2 or 3, **characterized in that** there are two fixing groups (106) in the same first spray bar (101), identical to each other but opposite each other, being symmetrically positioned at the opposite ends of the bar (101) to be fixed to said supporting structure (201, 204) on both sides of the conveyor belt (200).

5. Washing device (10a, 10b) according to claim 1 or 2 or 3, **characterized in that** said first bar (101) is fixed with said fixing group (106, 204) only on the side of the supply riser (103), while its opposite end is constrained to the supporting structure (201) only by insertion inside a hole as a centering.

6. Washing device (10a, 10b) according to claim 3 or 4 or 5, **characterized in that** said swivelling connection (105) comprises: ring gaskets (123), a circular flange (119) which protrudes from the end of the spray bar, a locking threaded ring nut (120) with conical thread (122), which is corresponding in the end of a connecting element (121) which protrudes from the supply riser (103).

7. Washing device (10a) according to claim 1 or 2 or 3 or 4 or 5 or 6, **characterized in that** said supply riser (103) is joined to said first spray bar (101) in structural and fluidic continuity, like a one-piece element.

8. Washing device (10b) according to claim 3 or 4 or 5 or 6, **characterized in that** said supply riser (103) is joined to said first spray bar (101) in fluidic but not structural continuity, being discontinuous and butt-connected with a swivelling connection (105) like said second spray bar (102, 105).

9. Washing device (10b) according to the previous claim, **characterized in that** said spray bars (101, 102) are equal to each other, with the same total length, the same flange of the swivelling connection (105, 119) and the same number of atomizing nozzles (104).

10. Washing device (10a, 10b) according to at least one of the previous claims, **characterized in that** said spray bars (101, 102) have a round tubular section, with said atomising nozzles (104) which are screwed onto them by interposing a shaped support and sealing gasket (127), which is flat (128) towards the nozzle and concave (129) towards the bar in such a way as to connect in continuity and formal coherence to the curved external surface of the bars, sealing all the interstices.

11. Washing device (10a, 10b) according to the previous claim, **characterized in that** said shaped support and sealing gasket (127) is colored.

## Patentansprüche

1. Vorrichtung (10a, 10b) zum Waschen und auch Desinfizieren vom sprühenden und ausrichtbaren Typs für ein Förderband (200) einer automatischen Bedienungsanlage (20) mit einer Tragkonstruktion (201) mit Seitenschienen (204), wobei die Vorrichtung (10) zwei rohrförmige Sprühleisten aufweist, die mit Zerstäubungsdüsen versehen sind, die einstückig und parallel zueinander sind, die horizontal über und unter ihr positioniert sein können, ohne sie zu berühren, sodass die Sprühstöße der Düsen gleichzeitig einen ihrer Abschnitte sowohl einer Außen- als auch Innenfläche in ihrer gesamten Breite (200, L) treffen; wobei die Waschvorrichtung (10a, 10b) einen einzelnen Einlass (130) für die Waschfluide aufweist, um eine Verbindung mit einem externen Strömungsnetzwerk (205) mit kontinuierlicher Strömung herzustellen; wobei die Waschvorrichtung (10a, 10b) mit der Tragkonstruktion der Anlage (20, 201) einstückig mit Befestigungsmitteln des mechanischen Typs verbindbar ist; wobei die Waschvorrichtung (10a, 10b) aus einer einzelnen rohrförmigen und koplanaren Konstruktion besteht, die auf einer Seite wie eine Gabel offen ist, mit einer ersten oberen Sprühleiste (101) und einer zweiten unteren Sprühleiste (102), die parallel zueinander sind und auf einer Seite mit einer gemeinsamen Versorgungssteigleitung (103) für die Waschfluide zusammengefügt sind, die orthogonal zu ihnen angeordnet ist, während sie auf der gegenüberliegenden Seite einzeln geschlossen sind und ohne Verbindungsstellen enden; und wobei die Versorgungssteigleitung (103) eine monodirektionale Strömung von unten nach oben aufweist, wobei der Einlass (130) dem unteren Ende entspricht und das gegenüberliegende Ende wie ein Winkelstück (132) gebogen ist, das horizontal stumpf mit der ersten Sprühleiste (101) zusammengefügt ist, während die zweite Sprühleiste (102) mit einer Verbindung orthogonal mit der Steigleitung (103) verbunden ist; und wobei die Waschströmung von unten senkrecht (103, 130, 131) in die Sprühleisten (101, 102) eintritt und darin weiter aus den fluchtenden Zerstäubungsdüsen (104) austritt; und wobei die gabelförmige (101, 102) Waschvorrichtung (10a, 10b) in die Tragkonstruktion (201) einfügt werden kann, indem sie seitlich eingesetzt wird und nur eine Sprühleiste durch mindestens ein Befestigungsmittel befestigt wird, um sie zu tragen und an dem Förderband (200) in Übereinstimmung mit einer Seitenschiene zu verriegeln und somit die gesamte Vorrichtung (10a, 10b) einstückig und abnehmbar in einer Betriebsposition zu befestigen; und wobei die andere Sprühleiste selbsttragend ist, indem sie auf einer Seite mit der Verbindung mit der Versorgungssteigleitung (103) zusammengefügt ist;
wobei die Waschvorrichtung (10a, 10b) **dadurch gekennzeichnet ist, dass** die erste obere Sprühleiste (101) mit mindestens einer vormontierten Befestigungsgruppe (106) vom Typ Bügel mit Klemme versehen ist, und wobei die Waschvorrichtung (10a, 10b) in ihrer Positionierung in Bezug auf das Band (200) ausgerichtet sein kann und um die Längsachse der ersten Sprühleiste (101, 125) oszilliert (102, 103, 133), bis die Befestigungsgruppe (106) vollständig derart angezogen ist, dass die Versorgungssteigleitung (103, 134) und die zweite Sprühleiste (102) in der gewünschten Position verriegelt sind.

2. Waschvorrichtung (10a, 10b) nach dem vorhergehenden Anspruch, **dadurch gekennzeichnet, dass** mindestens die zweite Sprühleiste (102) unabhängig von der vorgenannten Positionierung in Bezug auf das Band (133, 134, 200) ausgerichtet sein kann, wobei sie mit einer schwenkbaren Verbindung (105) mit der Versorgungssteigleitung (103) verbunden ist, die es ihr ermöglicht, sich um ihre eigene Achse (102, 123, 124) zu drehen und die Düsen (104) nach Bedarf zu führen.

3. Waschvorrichtung (10a, 10b) nach Anspruch 1 oder 2, **dadurch gekennzeichnet, dass** die Befestigungsgruppe (106) gegenüberliegende perforierte Scheiben (107a, 107b) und eine Kupplungsscheibe (108), die mit Klemmspannung wirkt, mit Anti-Infiltrations-Dichtungen (111) und mindestens einer selbstverriegelnden Dichtung (112) und mit einem flachen Bügel (110), der zwischen den perforierten Scheiben (107a, 107b) angeordnet ist und aus diesen vorsteht, beinhaltet, die mit einem Hauptloch (113), das koaxial zu den Scheiben für die erste Leiste (101) ist, und Löchern für Klemmschrauben (115) versehen ist, und wobei mindestens zwei Befestigungslöcher (114) in ihrem (110) vorstehenden Abschnitt platziert sind, um sie an der Tragkonstruktion (20, 201) ohne Drehungen zu befestigen, in Eingriff mit Schrauben (116) an entsprechenden Befestigungslöchern einer Seitenschiene (204), wie Durchgangslöchern und/oder Gewindesitzen, die in der Nähe des Bandes (200) mindestens auf der Seite der Versorgungssteigleitung (103) hergestellt sind.

4. Waschvorrichtung (10a, 10b) nach Anspruch 1 oder 2 oder 3, **dadurch gekennzeichnet, dass** zwei Befestigungsgruppen (106) in derselben ersten Sprühleiste (101) vorhanden sind, die identisch, aber einander gegenüberliegend sind und symmetrisch an den gegenüberliegenden Enden der Leiste (101) positioniert sind, um an der Tragkonstruktion (201, 204) auf beiden Seiten des Förderbandes (200) befestigt zu sein.

5. Waschvorrichtung (10a, 10b) nach Anspruch 1 oder 2 oder 3, **dadurch gekennzeichnet, dass** die erste Leiste (101) mit der Befestigungsgruppe (106, 204) nur auf der Seite der Versorgungssteigleitung (103) befestigt ist, während ihr gegenüberliegendes Ende nur durch Einsetzen in ein Loch als Zentrierung an der Tragkonstruktion (201) eingeschränkt ist.

6. Waschvorrichtung (10a, 10b) nach Anspruch 3 oder 4 oder 5, **dadurch gekennzeichnet, dass** die schwenkbare Verbindung (105) Folgendes umfasst: Ringdichtungen (123), einen kreisförmigen Flansch (119), der von dem Ende der Sprühleiste vorsteht, eine Verriegelungsgewinderingmutter (120) mit konischem Gewinde (122), die dem Ende eines Verbindungselements (121) entspricht, das aus der Versorgungssteigleitung (103) vorsteht.

7. Waschvorrichtung (10a) nach Anspruch 1 oder 2 oder 3 oder 4 oder 5 oder 6, **dadurch gekennzeichnet, dass** die Versorgungssteigleitung (103) mit der ersten Sprühleiste (101) in konstruktiver und strömungstechnischer Kontinuität zusammengefügt ist, wie ein einteiliges Element.

8. Waschvorrichtung (10b) nach Anspruch 3 oder 4 oder 5 oder 6, **dadurch gekennzeichnet, dass** die Versorgungssteigleitung (103) mit der ersten Sprühleiste (101) in strömungstechnischer, aber nicht konstruktiver Kontinuität zusammengefügt ist, wobei sie diskontinuierlich ist und mit einer schwenkbaren Verbindung (105), wie der zweiten Sprühleiste (102, 105), stumpf verbunden ist.

9. Waschvorrichtung (10b) nach dem vorhergehenden Anspruch, **dadurch gekennzeichnet, dass** die Sprühleisten (101, 102) einander gleich sind, die gleiche Gesamtlänge, den gleichen Flansch der schwenkbaren Verbindung (105, 119) und die gleiche Anzahl von Zerstäubungsdüsen (104) aufweisen.

10. Waschvorrichtung (10a, 10b) nach mindestens einem der vorhergehenden Ansprüche, **dadurch gekennzeichnet, dass** die Sprühleisten (101, 102) einen runden rohrförmigen Querschnitt aufweisen, mit den Zerstäubungsdüsen (104), die unter Zwischenschaltung einer geformten tragenden und abdichtenden Dichtung (127) auf sie aufgeschraubt sind, die zur Düse hin flach (128) und zur Leiste hin konkav (129) ist, sodass sie in Kontinuität und formaler Kohärenz eine Verbindung mit der gekrümmten Außenfläche der Leisten herstellt und alle Zwischenräume abdichtet.

11. Waschvorrichtung (10a, 10b) nach dem vorhergehenden Anspruch, **dadurch gekennzeichnet, dass** die geformte tragende und abdichtende Dichtung (127) farbig ist.

## Revendications

1. Dispositif de lavage et également de désinfection (10a, 10b), de type à pulvérisation et orientable, pour une bande transporteuse (200) d'une installation de manutention automatique (20) dotée d'une structure porteuse (201) avec des rails latéraux (204), lequel dispositif (10) comporte deux rampes de pulvérisation tubulaires munies de buses d'atomisation, solidaires et parallèles l'une à l'autre, qui peuvent être positionnées horizontalement au-dessus et en dessous de celui-ci sans le toucher, de sorte que les jets des buses atteignent simultanément une partie de sa surface externe et interne, sur toute sa largeur (200, L) ; ledit dispositif de lavage (10a, 10b) est doté d'une seule entrée (130) de fluides de lavage pour se connecter à un réseau d'écoulement externe (205) à flux continu ; ledit dispositif de lavage (10a, 10b) peut être assemblé à ladite structure porteuse de l'installation (20, 201) de manière solidaire, grâce à des moyens de fixation du type mécanique ; ledit dispositif de lavage (10a, 10b) est constitué d'une structure tubulaire unique et coplanaire, ouverte d'un côté comme une fourche, avec une première rampe de pulvérisation supérieure (101) et une seconde rampe de pulvérisation inférieure (102) qui sont parallèles l'une à l'autre et sont reliées d'un côté à une colonne montante commune d'alimentation (103) des fluides de lavage disposée orthogonalement à celles-ci, tandis que du côté opposé elles sont fermées individuellement et se terminent sans jonctions ; et dans lequel ladite colonne montante d'alimentation (103) a un écoulement monodirectionnel du bas vers le haut, avec l'entrée (130) en correspondance avec l'extrémité inférieure et avec l'extrémité opposée pliée comme un coude (132) qui est joint bout à bout horizontalement à ladite première rampe de pulvérisation (101), tandis que ladite seconde rampe de pulvérisation (102) est reliée orthogonalement à ladite colonne montante (103) par un raccord ; et dans lequel le flux de lavage entre par le bas perpendiculairement (103, 130, 131) auxdites rampes de pulvérisation (101, 102) et continue à l'intérieur en sortant des buses d'atomisation (104) qui sont alignées ; et dans lequel ledit dispositif de lavage (10a, 10b) en forme de fourche (101, 102) peut être joint à ladite structure porteuse (201) en l'insérant latéralement et en fixant seulement une rampe de pulvérisation par l'intermédiaire d'au moins un moyen de fixation pour la supporter et la verrouiller à la bande transporteuse (200) en correspondance avec un rail latéral, et fixant ainsi l'ensemble du dispositif (10a, 10b) d'une manière solidaire et amovible, en position de fonctionnement ; et dans lequel l'autre rampe de pulvérisation est autoportante, et jointe d'un côté à ladite colonne montante d'alimentation (103) avec ledit raccord ;
ledit dispositif de lavage (10a, 10b) est **caractérisé en ce que** la première rampe de pulvérisation supérieure (101) est munie d'au moins un groupe de fixation préassemblé (106), du type support avec pince, et dans lequel le dispositif de lavage (10a, 10b) peut être orienté dans son positionnement par rapport à la courroie (200), oscillant (102, 103, 133) autour de l'axe longitudinal de la première rampe de pulvérisation (101, 125) jusqu'à ce que ledit groupe de fixation (106) soit complètement serré de manière à verrouiller la colonne montante d'alimentation (103, 134) et la seconde rampe de pulvérisation (102) dans la position souhaitée.

2. Dispositif de lavage (10a, 10b) selon la revendication précédente, **caractérisé en ce qu'au** moins ladite seconde rampe de pulvérisation (102) peut être orientée indépendamment du positionnement susmentionné par rapport à la bande (133, 134, 200), en étant reliée à ladite colonne montante d'alimentation (103) par un raccord pivotant (105) qui lui permet de tourner autour de son propre axe (102, 123, 124), en dirigeant les buses (104) selon les besoins.

3. Dispositif de lavage (10a, 10b) selon la revendication 1 ou 2, **caractérisé en ce que** ledit groupe de fixation (106) inclut des disques perforés opposés (107a, 107b) et un disque d'accouplement (108) assurant le serrage par pince, des joints d'étanchéité anti-infiltration (111) et au moins un joint autobloquant (112), ainsi qu'un support plat (110) qui est interposé entre lesdits disques perforés (107a, 107b) et faisant saillie de ceux-ci, muni d'un trou principal (113) coaxial auxdits disques pour ladite première rampe (101) et de trous pour vis de serrage (115), et d'au moins deux trous de fixation (114) placés dans sa partie saillante (110) pour le fixer à ladite structure porteuse (20, 201) sans rotation, en prise avec des vis (116) sur des trous de fixation correspondants d'un rail latéral (204), comme trous traversants et/ou sièges filetés, réalisés à proximité de la courroie (200) au moins du côté de la colonne montante d'alimentation (103).

4. Dispositif de lavage (10a, 10b) selon la revendication 1 ou 2 ou 3, **caractérisé en ce qu'il** y a deux groupes de fixation (106) dans la même première rampe de pulvérisation (101), identiques l'un à l'autre mais opposés l'un à l'autre, et positionnés symétriquement aux extrémités opposées de la rampe (101) pour être fixés à ladite structure porteuse (201, 204) de chaque côté de la bande transporteuse (200).

5. Dispositif de lavage (10a, 10b) selon la revendication 1 ou 2 ou 3, **caractérisé en ce que** ladite première rampe (101) est fixée avec ledit groupe de fixation (106, 204) uniquement du côté de la colonne montante d'alimentation (103), tandis que son extrémité opposée est contrainte à la structure porteuse (201) uniquement par insertion à l'intérieur d'un trou en guise de centrage.

6. Dispositif de lavage (10a, 10b) selon la revendication 3 ou 4 ou 5, **caractérisé en ce que** ledit raccord pivotant (105) comprend : des joints annulaires (123), une bride circulaire (119) qui dépasse de l'extrémité de la rampe de pulvérisation, un écrou annulaire fileté de blocage (120) à filetage conique (122), qui correspond à l'extrémité d'un élément de raccordement (121) qui dépasse de la colonne montante d'alimentation (103).

7. Dispositif de lavage (10a) selon la revendication 1 ou 2 ou 3 ou 4 ou 5 ou 6, **caractérisé en ce que** ladite colonne montante d'alimentation (103) est reliée à ladite première rampe de pulvérisation (101) en continuité structurelle et fluidique, comme un élément monobloc.

8. Dispositif de lavage (10b) selon la revendication 3 ou 4 ou 5 ou 6, **caractérisé en ce que** ladite colonne montante d'alimentation (103) est reliée à ladite première rampe de pulvérisation (101) en continuité fluidique mais non structurelle, en étant discontinue et raccordée bout à bout avec un raccord pivotant (105) comme ladite seconde rampe de pulvérisation (102, 105).

9. Dispositif de lavage (10b) selon la revendication précédente, **caractérisé en ce que** lesdites rampes de pulvérisation (101, 102) sont égales entre elles, avec la même longueur totale, la même bride du raccord pivotant (105, 119) et le même nombre de buses d'atomisation (104).

10. Dispositif de lavage (10a, 10b) selon au moins l'une des revendications précédentes, **caractérisé en ce que** lesdites rampes de pulvérisation (101, 102) comportent une section tubulaire ronde, et sur lesquelles sont vissées lesdites buses d'atomisation (104) en interposant un joint d'appui et d'étanchéité profilé (127), plat (128) vers la buse et concave (129) vers la rampe de manière à se raccorder en continuité et cohérence formelle à la surface extérieure courbe des rampes, en scellant tous les interstices.

11. Dispositif de lavage (10a, 10b) selon la revendication précédente, **caractérisé en ce que** ledit joint de support et d'étanchéité profilé (127) est coloré.
